## Europäisches Patentamt
## European Patent Office
## Office européen des brevets

(19)

(11) Veröffentlichungsnummer: **0 095 020**
**B2**

(12) **NEUE EUROPÄISCHE PATENTSCHRIFT**

(45) Veröffentlichungstag der neuen Patentschrift:
27.12.89

(51) Int. Cl.⁴: **F 16 C 35/06, B 62 K 19/34**

(21) Anmeldenummer: 83102295.9

(22) Anmeldetag: 09.03.83

(54) Befestigung von Wälzlagern.

(30) Priorität: 06.05.82 DE 3216958

(43) Veröffentlichungstag der Anmeldung:
30.11.83 Patentblatt 83/48

(45) Bekanntmachung des Hinweises auf die Patenterteilung:
24.09.86 Patentblatt 86/39

(45) Bekanntmachung des Hinweises auf die Entscheidung
über den Einspruch:
27.12.89 Patentblatt 89/52

(84) Benannte Vertragsstaaten:
BE CH FR GB IT LI NL

(56) Entgegenhaltungen:
EP-A-0 049 675
DE-A-2 647 289
DE-A-2 905 683
DE-A-3 012 266
DE-A-3 024 546
DE-C-355 442
DE-C-1 133 649
DE-U-6 606 446
FR-A-2 355 202
US-A-2 779 641
US-A-3 532 402
US-A-4 235 488
US-A-4 286 894

(73) Patentinhaber: **FAG KUGELFISCHER GEORG
SCHÄFER Kommanditgesellschaft auf Aktien,
Georg- Schäfer- Strasse 30 Postfach 1260, D-8720
Schweinfurt (DE)**

(72) Erfinder: **Hofmann, Heinrich, Elsa- Brändström-
Strasse 43, D-8720 Schweinfurt (DE)**
Erfinder: **Ulsenheimer, Horst, Kiefernweg 10,
D-8721 Dittelbrunn (DE)**

(74) Vertreter: **Rehmann, Klaus H., Postfach 1260 (FAG)
Hauptbahnhofstrasse, D-8720 Schweinfurt (DE)**

EP 0 095 020 B2

EP 0 095 020 B2

2

## Beschreibung

Die Erfindung bezieht sich auf die Befestigung eines Hochschulterkugellagers nach dem Oberbegriff des Anspruchs 1.

Befestigungseinrichtungen von Walzlagern bei Fahrradtretlagerungen sind aus der DE-A-3 024 546 bekannt. Hier wird bereits eine einfache, axiale Fixierung mit Hilfe von Sperrscheiben, die auf einem rauhen Außenringabschnitt des Walzlagers sitzen und an der Stirnseite der Rahmenbuchse zur Anlage kommen, erreicht. Nachteilig ist hier, daß zum genauen radialen Einbau des Lagers auch die Bohrung der Rahmenbuchse genau bearbeitet sein muß. Ähnliches gilt auch für die Pedallagerung aus der DE-A-2 647 289, denn die hier gezeigten, nachträglich einzubauenden Zwischenhülsen müssen ebenso wie das Gehäuse mit einem Gewinde versehen werden.

Es ist daher Aufgabe der Erfindung, die Befestigungsvorrichtung der eingangs genannten Art so weiter zu verbessern, daß die obengenannten Nachteile vermieden werden und mit einfachen Mitteln auch dann eine genaue axiale und radiale Befestigung des/der Lager erreicht wird, wenn das Gehäuse bzw. der Rahmen nur teilweise oder nicht bearbeitet sind.

Die Lösung wird durch die Gesamtheit der kennzeichnenden Merkmale des Anspruchs 1 erzielt. Die Ansprüche 2 und 3 umfassen bevorzugte Ausführungen.

Wie schon in der DE-A-3 024 546 dargelegt, erfolgt die axiale Festlegung der Lager und deren Abstand über die Welle, hier indem die Laufbahnen in die Welle eingearbeitet sind. Erforderlich ist dann noch der Einbau dieser vormontierbaren Einheit, bestehend aus zwei Lagerreihen, die axial und radial nahezu spielfrei sind, auf eine Welle und in das Gehäuse. Dies erfolgt, indem zumindest auf einer Seite der Welle die erfindungsgemaße Zwischenhülse unter radialer Vorspannung zwischen dem Mantel des Außenrings und dem roh bearbeiteten Gehäuse eingepreßt wird. Damit die Zwischenhülsen im glatten Gehäuse immer eine bestimmte axiale Position einnehmen und nicht nach innen wandern können, besitzen sie im Teilquerschnitt ein L-förmiges Profil, wobei der radiale Schenkel im eingebauten Zustand an der Stirnfläche des Gehäuses zur Anlage kommt. Durch die Zähne am Außenring oder Gehäuse wird ein Herauswandern der Zwischenhülse verhindert. Im Hinblick auf gewisse Ungenauigkeiten der Lage der beiden Walzlageraufnahmestellen im Gehäuse ist es zweckmäßig, die Zähne nur im Bereich der beiden Stirnseiten des Außenrings anzuordnen. Dadurch ergibt sich eine Winkeleinstellbarkeit, indem sich die Zähne verschieden tief in die Kunststoffhülse eingraben. Damit ist unter Verwendung einfacher Mittel eine einfache Montage des Lagers möglich. Da die Zwischenhülse aus verformbarem Material besteht, kann auch ein Einbau in eine ungenaue bearbeitete Gehäusebohrung erfolgen ohne daß die Funktionsfähigkeit und Lebensdauer der Lager negativ beeinflußt werden. Eine evtl. Bearbeitung ist im übrigen nur in den Bereichen erforderlich, in denen die Zwischenhülse angeordnet ist. Eine vollständige und damit aufwendige Durchbohrung des Gehäuses ist nicht nötig.

In der EP-A-0 049 673 wird geoffenbart, zwischen dem Außenring eines Lagers und einem Gehäuse eine Zwischenhülse aus verformbaren Kunststoff anzuordnen. Insbesondere die Merkmale c bis d fehlen aber völlig, ebenso wie jeder Hinweis auf das Anwendungsgebiet Fahrradtretlagerung. Aus der US-A-2 779 641 sind zwar Außenringe von Wälzlagern mit Zähnen bekannt, damit wird aber ebenso wie bei der vorhergenannten Schrift nur ein Teil der hier aufgezeigten Probleme gelöst.

Weiterhin besteht die Möglichkeit, die Zwischenhülse zumindest über einen Bereich von ca. 180° zumindest auf der Mantelseite mit vorzugsweise axial gerichteten Aussparungen zu versehen. Dadurch werden radiale Toleranzprobleme weiter reduziert. Diese Wirkung wird noch verstärkt, wenn die Aussparungen im Mantel-und Bohrungsbereich so gegeneinander versetzt sind, daß sich eine mäanderähnliche Form ergibt.

Die Erfindung wird anhand eines Beispiels näher erläutert.

Figur 1 zeigt einen Teilquerschnitt durch die Tretlagerung eines Fahrrades.
Figur 2 zeigt einen vergrößerten Ausschnitt aus Figur 1.
Figur 3 zeigt einen Teilquerschnitt durch ein einreihiges Rillenkugellager mit Zähneanordnung.
Figur 4 zeigt eine speziell ausgebildete Zwischenhülse im Längsschnitt.
Figur 5 zeigt die Hülse nach Figur 4 in der Draufsicht.

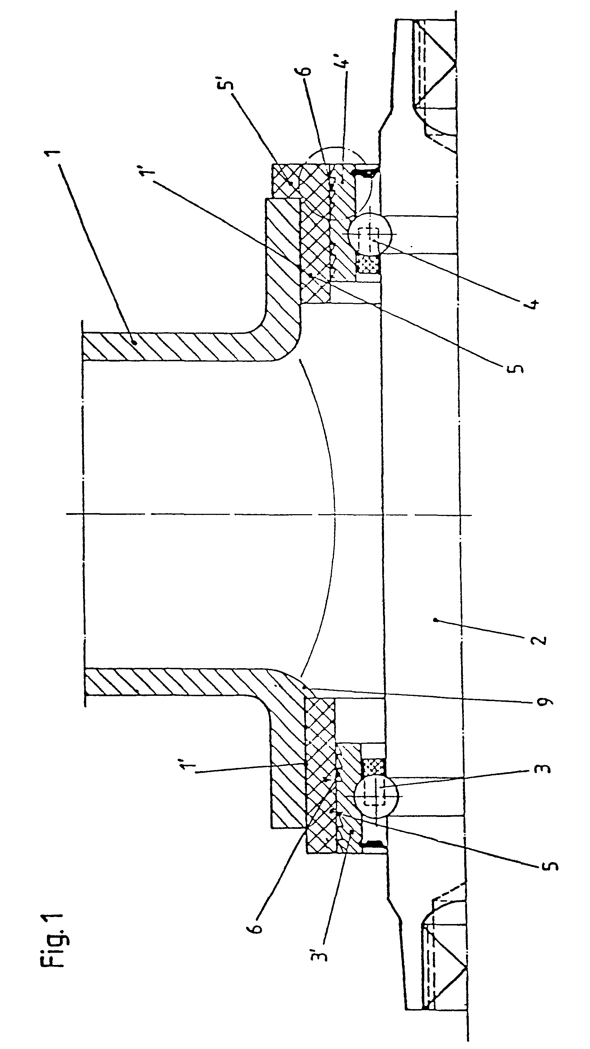

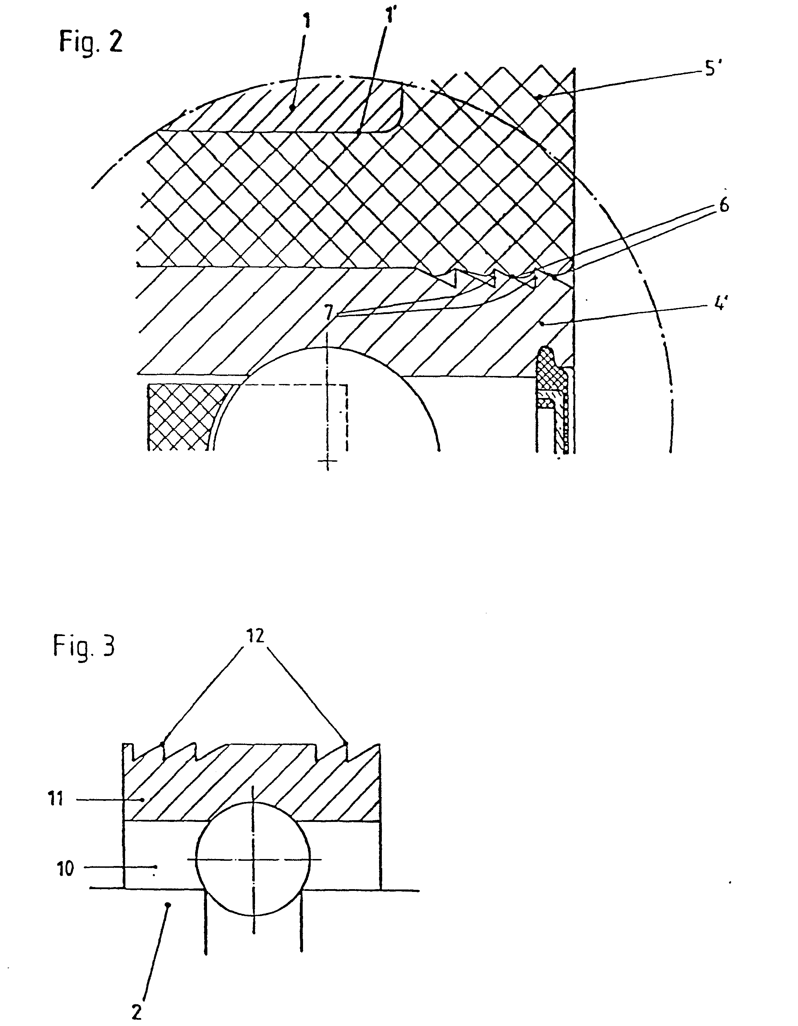

Die Tretlagerung eines Fahrrads ist, wie Figur 1 zeigt, im Rahmen 1 angeordnet. Sie besteht aus einer Welle 2 und den auf beiden Seiten angeordneten Kugellagern 3 und 4 mit höhen Schultern auf beiden Seiten zur Übertragung von Kraften in beiden axialen Richtungen, wobei die Laufbahnen dieser Kugellager direkt in die Welle 2 eingearbeitet sind. Zwischen den Außenringen 3' und 4 und Bohrungen 1' des Rahmens 1 ist eine Zwischenhülse 5 aus verformbarem Material, z. B. Kunststoff angeordnet. Damit eine brauchbare Befestigung entsteht, ist zwischen den Zwischenhülsen 5 und den Außenringen 3' und 4' sowie den Gehäusebohrungen 1' ein Übermaß vorgesehen. Um zu verhindern, daß die Zwischenhülsen 5 axial herauswandern, besitzen die Außenringe 3' und 4' Zähne 6, die sich im Hinblick auf das obengenannte Übermaß in die Zwischenbüchsen 5 eingraben. Die axiale Fixierung wird dadurch noch erhöht, daß Zähne auf der einen Seite, wie insbesondere die Figur 2 zeigt, senkrechte Flanken 7 besitzen. Von Bedeutung ist noch, daß die axiale Fixierung der Walzlager 3 und 4 über die Welle 2 erfolgt, und zwar weil die Laufbahnen direkt in diese eingearbeitet sind. Eine gute Lagerung ergibt sich insbesondere dann, wenn diese Lager weder ein Axial- noch ein Radialspiel besitzen.

Die Montage der Lagerung erfolgt in der Weise, daß zunächst die beiden Walzlager 3 und 4 auf der Welle 2 angeordnet werden. Danach wird die sich durch die Verwendung spezieller Käfige ergebende Baueinheit in den Rahmen 1 eingebracht. Daraufhin wird zunächst von der einen und dann von der anderen Seite die Zwischenhülse 5 eingepreßt. Damit diese Zwischenhülsen 5 ohne großen Aufwand die gewünschte Lage einnehmen, sind sie, wie Figur 1 zeigt, im Querschnitt L-förmig ausgeführt. Das Einpressen der Zwischenbuchsen 5 wird daher dann gestoppt, wenn die dabei entstehenden Schenkel 5' an den axialen Stirnflächen des Rahmens 1 zur Anlage kommen.

Mit den dargestellten Mitteln ergibt sich eine einfache Befestigung der Walzlager 3 und 4 im Rahmen 1 eines Fahrradtretlagers, und zwar auch dann, wenn dieser Rahmen 1 nicht genau bearbeitet ist. Durch die verformbare Zwischenbüchse 5 werden nämlich evtl. Ungenauigkeiten in radialer wie axialer Richtung ausgeglichen.

Um insbesondere bei nicht fluchtenden Lagersitzstellen eine Einstellung zu ermöglichen, kann die Ausführung nach Figur 3 Verwendung finden. Bei einem Hochschulterkugellager 10 gemäß Figur 3 ist eine solche Einstellung im Lager nicht möglich. Deshalb sind hier am Außenring 11 die Zähne 12 im Bereich der beiden Stirnseiten angeordnet. Dadurch können sich die Zähne 12 verschieden tief in die nicht gezeigte Zwischenhülse eingraben, wodurch eine gewisse Winkeleinstellbarkeit ermöglicht wird. Der mittlere zylindrische Abschnitt stellt dabei sicher, daß eine bestimmte Genauigkeit der radialen Position des Lagers eingehalten wird, denn hier kann allenfalls nur eine geringe Verformung erfolgen.

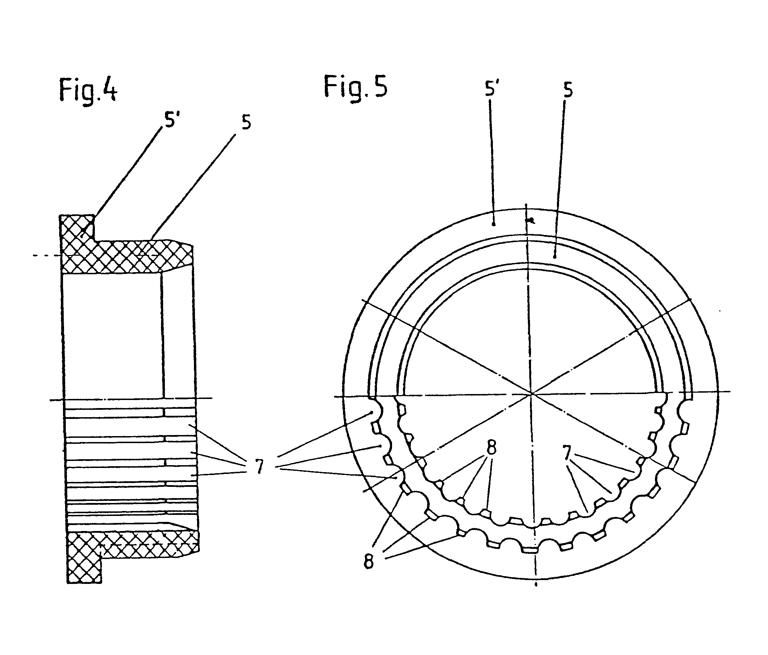

Damit die Wirkung radialer Ungenauigkeiten noch weiter herabgesetzt wird, kann auch eine Zwischenbüchse, wie sie in Figur 4 und 5 dargestellt ist, verwendet werden. Hier besitzt die Zwischenhülse 5 über einen Bereich von ca. 180° auf der Mantel- und Bohrungsseite axial gerichtete Aussparungen 7. Diese sind so gegeneinander versetzt, daß jeweils Aussparungen 7 auf der einen Seite Erhebungen 8 auf der anderen Seite gegenüberliegen. Durch diese Ausführung der Zwischenhülse 5 paßt sich diese Fertigungsungenauigkeiten noch besser an. Beim Einbau wird man dabei zweckmäßigerweise den nicht mit Aussparungen versehenen Bereich der Zwischenhülse 5 in der Lastzone anordnen. Dadurch wird sichergestellt, daß bei Belastung eine gewisse kleine elastische Verformung nicht überschritten wird.

## Patentansprüche

1. Befestigung eines einreihigen Hochschulterkugellagers (3, 4, 10) zumindest auf einer Seite einer Welle (2) im Gehäuse (1) bzw. Rahmen einer Fahrradtretlagerung mit zwei Lagern (3, 4), wobei die inneren Laufrillen der beiden Lager in die Welle integriert sind, die axiale Fixierung der Lager über die Welle erfolgt und zwischen dem Außenring (3', 4', 11) des Lagers (3, 4, 10) und dem Gehäuse (1) eine nachträglich einzubauende Zwischenhülse (5) angeordnet ist, *gekennzeichnet* durch folgende Merkmale:

a. die Zwischenhülse (5) besteht aus verformbarem Material z. B. Kunststoff,
b. zwischen der Zwischenhülse (5) und dem Außenring (3', 4', 11) sowie der Gehäusebohrung (1') besteht ein Übermaß;
c. die Zwischenhülse (5) besitzt im Teilquerschnitt ein L-förmiges Profil mit einem radial nach außen gerichteten Schenkel, der beim Einbau an der axialen Stirnfläche des Gehäuses (1) zur Anlage kommt,
d. der Außenring (3', 4', 11) bzw. das Gehäuse (1) besitzt auf einem Teil der Mantelfläche bzw. der Bohrungsfläche (1') im Zwischenhülsenbereich Zähne (6, 12),
e. die Zähne (6, 12) sind nur im Bereich der beiden Stirnseiten des Außenrings (3', 4', 11) angeordnet.

2. Befestigung nach Anspruch 1, *dadurch gekennzeichnet*, daß die Zwischenhülse (5) zumindest über einen Bereich von ca. 180° zumindest auf der Mantelseite mit vorzugsweise axial gerichteten Aussparungen (7) versehen ist.

3. Befestigung nach Anspruch 2 mit Aussparungen im Mantel- und Bohrungsbereich, *dadurch gekennzeichnet*, daß die Aussparungen (7) so gegeneinander versetzt sind, daß jeweils Aussparungen (7) auf der einen Seite Erhebungen (8) auf der anderen Seite gegenüberliegen.

## Claims

1. Fixation of a single-row rigid deep-groove ball bearing (3, 4, 10) on at least one end portion of a shaft (2) mounted in a housing (1) or in the frame of a bicycle bottom bracket support comprising two bearings (3, 4), wherein the inner track of each of the two bearings forms an integral part of the shaft, wherein the bearings are locked in their respective axial positions by the shaft, and wherein a, subsequently insertable, intermediate sleeve (5) is arranged between the outer race (3', 4', 11) of each of the bearings (3, 4, 10) and the housing (1), *characterized* by the following features:

a) the intermediate sleeve (5) is made of a ductile material, for example a plastics material;
b) the fits between the sleeve (5) and, on the one hand, the respective outer race (3', 4', 11) and, on the other hand, the housing (1) are interference fits;
c) the sleeve (5) is, cross-sectionally, L-shaped, one leg of which extends radially outwardly and, when the sleeve is inserted, comes to rest against the respective axial end face of the housing (1);

d) a part - disposed in the region of the sleeve - of the surface of each of the outer races (3', 4', 11), or of the bore (1') of the housing (1), is provided with teeth (6, 12); and

e) the teeth (6, 12) are located only in the regions adjoining the two end faces of the respective outer race (3', 4', 11).

2. Fixation according to claim 1, *characterized* in that the sleeve (5), at least over an area of approximately 180°, at least on its outside diameter, features recesses (7) extending preferably in the axial direction.

3. Fixation according to claim 2 with recesses in the outside diameter and bore areas, *characterized* in that the recesses (7) are arranged offset such that recesses (7) on the one side are opposite to ridges (8) on the other side.

**Revendications**

1. Fixation, dans un logement (1) ou cage d'un pédalier de bicyclette à deux roulements (3, 4), d'un roulement à billes (3, 4, 10) à un seul rang de billes et à épaulement élevé, monté au moins sur un côté de l'arbre (2), dans lequel les gorges de roulement des deux roulements sont intégrées dans l'arbre, ce dont résulte l'immobilisation axiale des roulements par rapport à l'arbre, et une douille intercalaire (5), qui doit être mise en place postérieurement, étant placée entre la bague extérieure (3', 4', 11) du roulement (3, 4, 10) et le logement (1), caractérisée en ce que:

a) la douille intercalaire (5) est en matériau déformable, par exemple en matière plastique;

b) un surdimensionnement est prévu entre la douille intercalaire (5) et la bague extérieure (3', 4', 11) ainsi qu'entre ladite douille et le perçage (1') du logement;

c) la douille intercalaire présente sur une partie de son contour une section en L avec une partie dirigée radialement vers l'extérieur, qui vient en appui sur la face axiale frontale du logement (1) lors du montage;

d) la bague extérieure (3', 4', 11), ou le logement (1), présente sur une partie de sa surface extérieure, ou sur une partie de la surface de l'alésage, des dents (6, 12) dans le domaine de la douille intercalaire;

e) les dents (6, 12) ne sont placées que dans le domaine des deux faces frontales de la bague extérieure (3', 4', 11).

2. Fixation selon la revendication 1, caractérisée en ce que la douille intercalaire présente, au moins sur une zone d'environ 180°, au moins du côté de sa surface extérieure, des échancrures (7), de préférence dirigées axialement.

3. Fixation selon la revendication 2, comportant des échancrures dans le domaine de la surface extérieure et de l'alésage de la douille intercalairen, caractérisée en ce que les échancrures (7) sont décalées de telle sorte que les échancrures (7) d'un côté correspondent à des saillies sur le côté opposé.

Fig.1

Fig. 2

Fig. 3

## Fig.4

## Fig.5